# EUROPÄISCHE PATENTSCHRIFT

(11) **EP 0 447 620 B1**
(45) Veröffentlichungstag und Bekanntmachung des Hinweises auf die Patenterteilung: **09.03.1994**
(21) Anmeldenummer: 90121456.9
(22) Anmeldetag: 09.11.1990
(51) Int. Cl.: B23B 47/28

(54) **Bohrmaschine mit automatischem Vorschub**
Drilling machine with automatic feed
Machine de forage à avance automatique

(30) Priorität: 21.02.1990 DE 4005431
(43) Veröffentlichungstag der Anmeldung: 25.09.1991
(73) Patentinhaber: Eurocopter Deutschland Gesellschaft mit beschränkter Haftung, D-81611 München (DE)
(72) Erfinder: Pfefferle, Alfons, W-8851 Eggelstetten (DE)
(74) Vertreter: Frick, Gerhard, Dipl.-Ing.

(56) Entgegenhaltungen:
- WO-A-85/03466
- DE-A- 3 516 782
- US-A- 2 674 906
- US-A- 4 850 763

## Beschreibung

Die Erfindung bezieht sich auf eine Bohrmaschine mit automatischem Vorschub zum Herstellen von Lochreihen in Werkstücken mit gleichförmig gekrümmter Oberfläche, nach dem Oberbegriff des Patentanspruchs 1.

Bekannte Bohrmaschinen dieser Art, wie sie etwa zur Herstellung von Nietlochreihen an kreiszylindrischen Flugzeugrumpfteilen verwendet werden, besitzen einen mittels einstellbarer Stützelemente auf die Werkstückoberfläche aufsetzbaren, in Axialrichtung der Bohrspindel verschieblich am Maschinengehäuse angeordneten Führungsfuß sowie einen entsprechend dem jeweiligen Bohrlochabstand radial zur Bohrspindelachse verstellbaren, über einen Führungsschlitz im Führungsfuß in das vorausgehende Bohrloch einführbaren Spannstift, mit deren Hilfe die Bohrmaschine zum Zwecke des automatischen Vorschubs am Werkstück lagerichtig, nämlich mit der Bohrspindelachse senkrecht zur örtlichen Tangentialebene an der jeweiligen Bohrstelle, einseitig von der Werkstückoberfläche aus festgespannt wird, ohne daß es irgendwelcher Spannelemente, die an der Werkstück-Rückseite positioniert werden müssen, bedarf. Mit diesem bekannten Gerät können
an gekrümmten Werkstücken, etwa unter Verwendung einer zur Werkstück-Oberfläche konformen Bohrschablone, jedoch nur solche Bohrlochmuster einfach und präzise verbohrt werden, bei denen sämtliche Bohrlochachsen in einer gemeinsamen, durch das Krümmungszentrum der Werkstückoberfläche verlaufenden Ebene liegen, während die Herstellung von ovalen Bohrlochbildern z. B. an Flugzeug-Fenster- oder -Türausschnitten mit einer derartigen Bohrvorrichtung nicht oder allenfalls nur dann möglich ist, wenn die Stützelemente in umständlicher Weise an jedem einzelnen Bohrloch neu einjustiert werden.

Demgegenüber ist es Aufgabe der Erfindung, eine Bohrmaschine der eingangs genannten Art so auszubilden, daß unter Beibehalt einer einseitigen Verankerung an gleichförmig gekrümmten Werkstückoberflächen beliebige Bohrlochbilder mit automatischem Vorschub einfach und präzise verbohrt werden können.

Diese Aufgabe bei einer Bohr maschine der Eingangs genannten Art wird erfindungsgemäß durch die im Anspruch 1 gekennzeichnete Bohrmaschine gelöst.

Aufgrund der besonderen Ausbildung und der kinematischen Entkoppelung von Abstützvorrichtung und Spannstift ist die erfindungsgemäße Bohrmaschine auf der gekrümmten Werkstückoberfläche in jeder erwünschten Richtung derart verschiebbar, daß sowohl der Spannstift über bzw. in einem vorausgehenden Bohrloch positioniert werden kann, als auch eine winkelgenaue, vorzugsweise senkrechte Ausrichtung der Bohrspindelachse zur örtlichen Tangentialebene der Werkstückoberfläche an der jeweiligen Bohrstelle sichergestellt wird. Infolgedessen lassen sich mit äußerst geringem Arbeits- und Bauaufwand und ohne umständliches Nachjustieren der Stützelemente ovale oder andere, beliebige Bohrlochmuster an einem gleichförmig gekrümmten Werkstück, etwa einem teilzylindrisch gebogenen Flugzeugrumpfteil, verbohren, wobei sämtliche Bohrungen mit Ausnahme der jeweils ersten in der Bohrlochreihe mit automatischem Vorschub und einer für die Dauer des Bohrvorganges sicheren Fixierung der Bohrmaschine am Werkstück durchführbar sind.

Wie bereits erwähnt, wird die Bohrmaschine zweckmäßigerweise mit der Bohrspindelachse senkrecht zur örtlichen Tangentialebene der Werkstückoberfläche festgespannt, d. h. die Bohrlochachsen der einzelnen Bohrlöcher verlaufen jeweils in Richtung der örtlichen Flächennormalen. Zu diesem Zweck sind die Abstützvorrichtung und der Spannstift gemäß Anspruch 2 unabhängig voneinander konzentrisch zur Bohrspindelachse in einer zu dieser senkrechten Ebene schwenkbeweglich angeordnet.

Damit die Aussparung in der Abstützvorrichtung eine für die meisten Bohrlochbilder ausreichende Verstellmöglichkeit des Spannstiftes bietet und dennoch aus Stabilitätsgründen möglichst klein gehalten wird, ist sie gemäß Anspruch 3 zweckmäßigerweise als zur Bohrspindelachse konzentrischer Kreisringsektor ausgebildet. Je nach der Relativlage und dem maximalen Bohrlochabstand des gewünschten Bohrlochmusters kann die Aussparung im Einzelfall natürlich auch eine geometrisch andere Form aufweisen.

Eine besonders kippfeste Abstützung und drehmomentensichere Verankerung des Bohrmaschinengehäuses während des Bohrvorganges wird gemäß Anspruch 4 vorzugsweise dadurch erreicht, daß die Abstützvorrichtung eine mit der Aussparung versehene, um die Bohrspindelachse drehbar gelagerte Stützplatte und einen flächig auf der Stützplatte aufliegenden und gemeinsam mit dem Bohrmaschinengehäuse konzentrisch zur Bohrspindelachse gegenüber der Stützplatte drehpositionierbaren Führungsfuß mit einem radialen Führungsschlitz für den Spannstift enthält.

Gemäß Anspruch 5 bilden die Stützelemente mindestens eine Vierpunkt-Auflage auf der Werkstückoberfläche, so daß sich durch eine einfache Überprüfung der Standfestigkeit der Abstützvorrichtung auf der Werkstückoberfläche feststellen läßt, ob die Abstützvorrichtung an sämtlichen vier Stützpunkten Kontakt zum Werkstück besitzt und sich daher in der für eine winkelgenaue Fixierung der Bohrspindelachse bezüglich der örtlichen Flächennormalen richtigen Ausrichtung zur Werkstückoberfläche befindet. In diesem Fall wird eine besonders einfache Einstellmöglichkeit der Stützelemente an den Krümmungsradius von einfach gekrümmten Werkstücken gemäß Anspruch 6 dadurch erreicht, daß die bohrspindelfernen Stützelemente als hinsichtlich des Abstandes von der Bohrspindelachse einstellbar an der Abstützvorrichtung befestigte, in geradlinigem Kontakt auf eine Mantellinie der Werkstückoberfläche aufsetzbare Winkelleiste ausgebildet sind.

Gemäß Anspruch 7 schließlich empfiehlt es sich, eines der Stützelemente als Fixpunkt in Form eines zur Bohrspindelachse koaxial angeordneten, mit einer Durchgangsbohrung für das Bohrwerkzeug versehenen Stützringes auszubilden, wodurch eine verbesserte Abstützung unmittelbar im Randbereich der Bohrstelle erreicht und bei Verwendung einer Bohrschablone die exakte Positionierung der Bohrmaschine mit Hilfe des Stützringes erleichtert wird.

Die Erfindung wird nunmehr anhand zweier Ausführungsbeispiele in Verbindung mit den Zeichnungen erläutert. Es zeigen in schematischer Darstellung:
- Fig. 1: eine seitliche Teilansicht einer Bohrmaschine nach der Erfindung beim Verbohren eines kreiszylindrisch gebogenen Werkstücks;
- Fig. 2: die Aufsicht der Bohrmaschine im Schnitt II-II der Fig. 1;
- Fig. 3: eine perspektivische Darstellung eines teilzylindrisch gebogenen Flugzeugrumpfteiles mit einem ovalen, teilweise noch unverbohrten Bohrlochbild im Bereich des Fensterausschnitts; und
- Fig. 4: eine der Fig. 2 ähnliche Darstellung einer für zweidimensional gekrümmte Werkstücke modifizierten Bohrmaschine von der Unterseite der Abstützvorrichtung.

Die in den Fig. gezeigte Bohrmaschine dient zum Verbohren eines gleichförmig kreiszylindrisch gebogenen Werkstücks 2 mit automatischem Vorschub und wird mit Hilfe einer Spann- und Abstützvorrichtung 4 einseitig am Werkstück 2 derart befestigt, daß die Bohrspindelachse A-A während des Bohrvorganges senkrecht zur örtlichen Tangentialebene an der jeweiligen Bohrstelle gehalten bleibt. Die einzelnen Bohrpositionen am Werkstück 2 werden durch eine zur Werkstückoberfläche konforme, entsprechend dem gewünschten Bohrlochbild mit Durchgangsbohrungen 6 versehene Bohrschablone 8 festgelegt.

Die Spann- und Abstützvorrichtung 4 enthält drei Führungshülsen 10, 12 und 14, über die das Gehäuse 16 der Bohrmaschine höhenverschieblich an der Vorrichtung 4 abgestützt ist. Die Führungshülse 10 ist koaxial zur Bohrspindel (nicht gezeigt) und dem daran befestigten Bohrwerkzeug 18 und diese ringförmig umschließend angeordnet, während die beiden anderen Führungshülsen 12 und 14 mit parallelem Abstand zur Bohrspindelachse A-A in zueinander konzentrischer Anordnung verlaufen und die Führungshülse 14 gegenüber der Hülse 12 axial verschieblich und drehbar gelagert ist.

Am unteren Ende der Führungshülse 10 ist eine Stützplatte 20 mittels einer Lagerbuchse 22 relativ zum Gehäuse 16 um die Bohrspindelachse A-A schwenkbar angebracht, derart, daß die Bohrspindelachse A senkrecht zur Plattenebene gehalten wird. An der Lagerbuchse 22 befindet sich ein Stützelement 24 in Form eines mit einer Durchlaßöffnung für das Bohrwerkzeug 18 versehenen Ringbundes, der an der jeweiligen Bohrstelle auf der Werkstückoberfläche aufliegt und die Bohrspindelachse A konzentrisch zur entsprechenden Durchgangsbohrung 6 der Bohrschablone 8 positioniert. Über weitere Stützelemente, nämlich eine an der Stützplatte 20 über Langlochverbindungen 26 bezüglich des Abstandes zur Bohrbspindelachse A einstellbar befestigte und entsprechend der Werkstück-Krümmung voreingestellte Winkelleiste 28 und zwei an den bohrspindelseitigen Ecken der Stützplatte 20 feststehend angeordnete Auflagestücke 30 wird die Stützplatte 20 derart auf der Werkstückoberfläche bzw. der Bohrschablone 8 positioniert, daß die Bohrspindelachse A an jeder Bohrstelle exakt auf der örtlichen Flächennormalen liegt, wobei die Stützelemente 24 und 30 einerseits und die Winkelleiste 28 andererseits jeweils längs einer Mantellinie der Zylinderoberfläche mit dem Werkstück 2 bzw. der Bohrschablone 8 in Kontakt stehen. Bei einer nicht-ordnungsgemäßen, d. h. zur örtlichen Tangentialebene nicht parallelen Ausrichtung besitzt die Stützplatte 20 lediglich eine Zweipunktauflage auf der Werkstück- (bzw. Bohrschablonen-) Oberfläche, so daß sich durch Überprüfung der Standfestigkeit der Stützplatte 20 eine einfache Kontroll- und Korrekturmöglichkeit für die lagerichtige Positionierung der Stützplatte 20 bietet.

Die Spann- und Abstützvorrichtung 4 besitzt ferner einen an der Führungshülse 12 und - mittels eines buchsenförmigen Verlängerungstücks 32 - an der Führungshülse 10 angebrachten Führungsfuß 34, der durch die Führungshülse 12 in flächigen Kontakt mit der Oberseite der Stützplatte 20 gedrückt wird und mit einem bezüglich der Bohrspindelachse A radialen Führungsschlitz 36 versehen ist. Unterhalb des Führungsschlitzes 36 befindet sich in der Stützplatte 20 eine kreissektorförmige Aussparung 38, die innerhalb der von den Stützelementen 24, 28 und 30 begrenzten Aufstandsfläche der Stützplatte 20 liegt und deren Radiallänge und Winkelgröße so bemessen sind, daß bei ordnungsgemäßer Ausrichtung der Stützplatte 20 auf der Werkstützoberfläche an jeder neuen Bohrposition stets zumindest ein vorausgehendes Bohrloch unterhalb der Aussparung 38 liegt, so daß dann durch Drehung des Maschinengehäuses 16 und des mit diesem über die Führungshülsen 10 und 12 drehfest verkoppelten Führungsfußes 34 bezüglich der Stützplatte 20 der Führungsschlitz 36 über dem vorausgehenden Bohrloch positioniert und ein im Führungsschlitz 36 gleitend verschiebbarer Spannstift 40 in das Bohrloch eingeführt werden kann. Der Spannstift 40 ist über einen Kragarm 42 und einen Drehzapfen 44 mit einer hebelförmigen Verlängerung 46 der auf der Hülse 12 verschieblich und drehbar gelagerten Führungshülse 14 verbunden, und bei Betätigung der Bohrmaschine wird ein im Maschinengehäuse angeordneter (nicht-gezeigter) Vorschubzyliner aktiviert, durch den die Hülse 14 in das Maschinengehäuse 16 eingezogen wird. Unter der Wirkung der dabei auf den Spannstift 40 ausgeübten Zugkraft verspreizt sich dieser zunächst in dem vorausgehenden Bohrloch, woraufhin das Maschinengehäuse 16 und somit auch die Bohrspindel und das daran befestigte Bohrwerkzeug 18 auf den Führungshülsen 10, 12 lagerichtig zum Werkstück 2 hin verschoben werden. Bei Erreichen der gewünschten Bohrtiefe wird durch einen am Verlängerungsstück 32 des Führungsfußes 34 befestigten Anschlag 48 ein einstellbarer Kontakthebel 50 am Maschinengehäuse 16 betätigt und dadurch der Vorschubzylinder freigeschaltet, so daß der nunmehr zugkraftentlastete Spannstift 40 aus der Bohrung freikommt und das Maschinengehäuse 16 auf den Führungshülsen 10, 12 hochgefahren und der Spindelantrieb abgeschaltet wird, woraufhin der Bohrvorgang an einer weiteren Bohrstelle wiederholt werden kann.

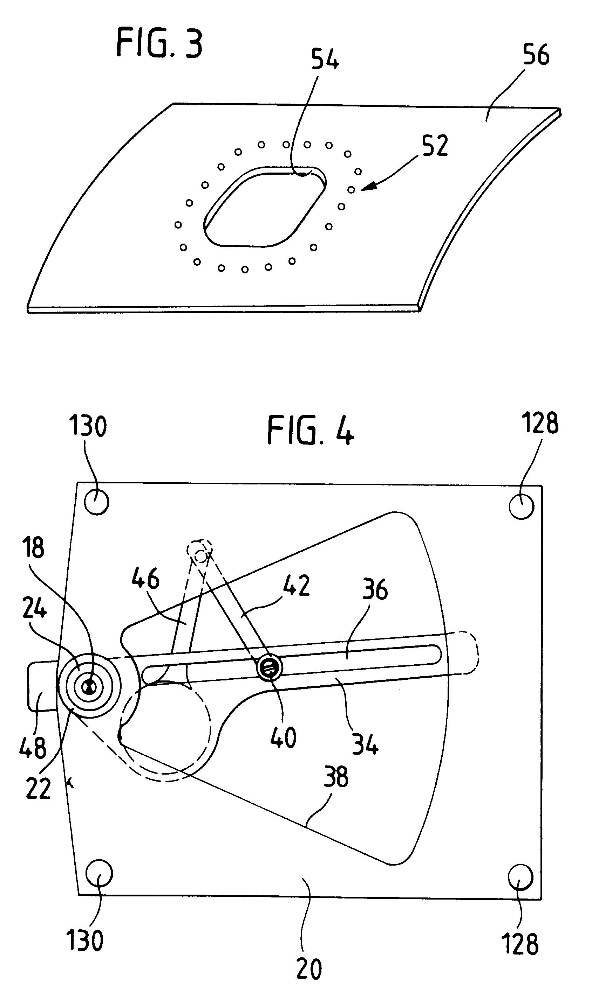

Ein mit der beschriebenen Bohrmaschine herstellbares, ovales Bohrlochbild 52 für eine versenkte Nietlochreihe im Bereich des Fensterausschnitts 54 eines teilzylindrischen Flugzeug-Rumpfteils 56 ist in Fig. 3 gezeigt.

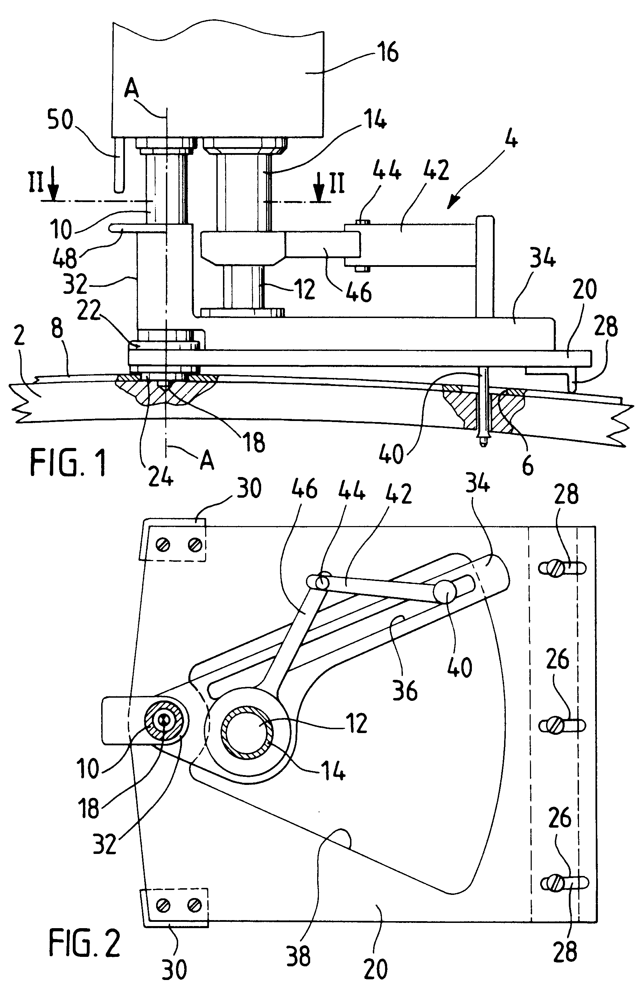

Die Bohrmaschine gemäß Fig. 4, bei der die dem ersten Ausführungsbeispiel entsprechenden Bauteile durch das gleiche Bezugszeichen gekennzeichnet sind, unterscheidet sich von diesem lediglich durch eine andersartige Ausbildung der Stützelemente dergestalt, daß anstelle der Winkelleiste an den bohrspindelfernen Ecken der Stützplatte 20 zwei höhenverstellbare Stützelemente 128 vorgesehen und die festen Stützelemente 30 (Fig. 2) im vorderen Eckbereich der Stützplatte 20 durch ebenfalls höhenverstellbare Stützelemente 130 ersetzt sind. Diese Modifikation der Stützelemente macht die Bohrmaschine nicht nur für kreiszylindrisch gebogene, sondern auch für Werkstücke mit zweidimensional gleichförmig gekrümmter, kugelförmiger Werkstückoberfläche verwendbar, wobei die höhenverstellbaren Stützelemente 128, 130 wiederum nach Maßgabe der Oberflächenkrümmung so voreingestellt werden, daß sämtliche Stützelemente einschließlich des plattenfesten Stützrings 24 auf der Werkstück- bzw. - bei Verwendung einer Bohrschablone - auf der Schablonen-Oberfläche aufliegen und die Stützplattenebene parallel zur örtlichen Tangentialebene des Werkstücks an der Bohrspindelachse A halten. Auf diese Weise lassen sich ebenfalls wieder beliebige Bohrbilder an Werkstücken gleicher Oberflächenkrümmung mit automatischem Vorschub herstellen, ohne daß eine Nachjustierung der Stützelemente 128, 130 nötig ist. Im übrigen ist die Bau- und Funktionsweise der Bohrmaschine gemäß Fig. 4 die gleiche wie bei dem ersten Ausführungsbeispiel.

## Patentansprüche

1. Bohrmaschine mit automatischem Vorschub zum Herstellen von Lochreihen in Werkstücken mit gleichförmig gekrümmter Oberfläche, mit einer die Bohrmaschine kippfest fixierenden Abstützvorrichtung (4, 20), die über entsprechend der Werkstück-Krümmung voreinstellbare Stützelemente (24, 28, 30, 128, 130) auf die Werkstückoberfläche aufsetzbar ist, und mit einem bezüglich der Bohrspindelachse (A) verstellbaren, in ein vorausgehendes Bohrloch einführbaren und die Bohrmaschine während des Bohrvorgangs vorschubkraftübertragend mit dem Werkstück als Widerlager verankernden Spannstift (40), der in der Eingriffslage die Abstützvorrichtung (4, 20) innerhalb der von den Stützelementen (24, 28, 30, 128, 130) umgrenzten Aufstandsfläche durchgreift,
dadurch **gekennzeichnet**, daß
der Spannstift (40) relativ zur Abstützvorrichtung (4, 20) im Bereich der Aufstandsfläche zweidimensional, nämlich sowohl radial wie auch azimutal zur Bohrspindelachse (A), verstellbar und die Abstützvorrichtung mit einer sich in Radial- und Umfangsrichtung der Bohrspindelachse entsprechend dem Verstellbereich des Spannstiftes (40) erstreckenden, beim Bohrvorgang über dem vorausgehenden Bohrloch positionierten Aussparung (38) versehen ist.

2. Bohrmaschine nach Anspruch 1,
dadurch **gekennzeichnet**, daß
die Abstützvorrichtung (4, 20) und der Spannstift (40) unabhängig voneinander konzentrisch zur Bohrspindelachse (A) in einer zu dieser senkrecht verlaufenden Ebene schwenkbeweglich sind.

3. Bohrmaschine nach Anspruch 1 oder 2,
dadurch **gekennzeichnet**, daß
die Aussparung (38) als zur Bohrspindelachse (A) konzentrischer Kreisringsektor ausgebildet ist.

4. Bohrmaschine nach einem der vorhergehenden Ansprüche,
dadurch **gekennzeichnet**, daß
die Abstützvorrichtung (4, 20) eine mit der Aussparung (38) versehene, um die Bohrspindelachse (A) drehbar gelagerte Stützplatte (20) und einen flächig auf der Stützplatte aufliegenden und gemeinsam mit dem Bohrmaschinengehäuse (16) konzentrisch zur Bohrspindelachse gegenüber der Stützplatte drehpositionierbaren Führungsfuß (34) mit einem radialen Führungsschlitz (36) für den Spannstift (40) enthält.

5. Bohrmaschine nach einem der vorhergehenden Ansprüche,
dadurch **gekennzeichnet**, daß
die Stützelemente (24, 28, 30, 128, 130) mindestens eine Vierpunkt-Auflage auf der Werkstückoberfläche bilden.

6. Bohrmaschine nach Anspruch 5,
dadurch **gekennzeichnet**, daß
die bohrspindelfernen Stützelemente als hinsichtlich des Abstandes von der Bohrspindelachse (A) einstellbar an der Abstützvorrichtung (4, 20) befestigte, in geradlinigem Kontakt auf eine Mantellinie der Werkstückoberfläche aufsetzbare Winkelleiste (28) ausgebildet sind.

7. Bohrmaschine nach einem der vorhergehenden Ansprüche,
dadurch **gekennzeichnet**, daß
eines der Stützelemente als zur Bohrspindelachse (A) koaxial angeordneter, mit einer Durchgangsbohrung für das Bohrwerkzeug (18) versehener Stützring (24) ausgebildet ist.

## Claims

1. Drilling apparatus with automatic feed for the production of rows of holes in workpieces having a uniformly curved surface, comprising a support device (4, 20), which non-tiltingly fixes the drilling apparatus and which is fitted onto the workpiece surface via supporting elements (24, 28, 30, 128, 130) which are preset to correspond with the curvature of the workpiece, and with a tension pin (40), which is adjustable relative to the bore-spindle axis (A) and insertable into an advancing borehole and which anchors the drilling apparatus during the drilling process whilst transferring the forward thrust to the workpiece as an abutment and which in the engaging position passes through the support device (4, 20) within the placement surface which is defined by the support elements (24, 28, 30, 128, 130), **characterised in that** the tension pin (40) is two-dimensionally adjustable relative to the supporting device (4, 20) in the area of the placement surface, i.e. both radially and azimuthally relative to the bore-spindle axis (A), and that the supporting device is provided with a cut-out (38), which is during the drilling process positioned over the advancing borehole and which extends in the radial and peripheral direction of the bore-spindle axis to correspond with the adjustment range of the tension pin (40).

2. Drilling apparatus according to claim 1, **characterised in that** the support device (4, 20) and the tension pin (40) are independent from each other pivotable concentrically to the bore-spindle axis (A) in a thereto vertically extending plane.

3. Drilling apparatus according to claim 1 or 2, **characterised in that** the cut-out (38) is arranged as a circular sector which is concentrical relative to the bore-spindle axis (A).

4. Drilling apparatus according to one of the above claims, **characterised in that** the support device (4, 20) includes a support plate (20), which is provided with the cut-out (38) and mounted to be rotatable around the bore-spindle axis (A), and a guide shoe (34) with radial guide slot (46) for the tension pin (40), which guide shoe is surface-seated on the support plate and which is together with the drilling-apparatus housing (16) rotationally placed concentrically to the bore-spindle axis relative to the support plate.

5. Drilling apparatus according to one of the above claims, **characterised in that** the support elements (24, 28, 30, 128, 130) form at least one four-point seating on the workpiece surface.

6. Drilling apparatus according to claim 5, **characterised in that** the support elements remote from the bore spindle are arranged to be an angular ledge (28), which is mounted on the support device (4, 20) so as to be adjustable relative to the distance from the bore-spindle axis (A), and are seated in a straight contact onto a casing line of the workpiece surface.

7. Drilling apparatus according to one of the above claims, **characterised in that** one of the support elements is a support ring (24), which is arranged coaxially to the bore-spindle axis (A) and which is provided with a through-bore for the drilling tool (18).

## Revendications

1. Perceuse à avance automatique pour réaliser des séries de trous dans des pièces à courbure régulière, comportant un ensemble support (4, 20) qui maintient la perceuse sans possibilité de basculement et qui, par des éléments d'appui (24, 28, 30, 128, 130) préréglables en fonction de la courbure de la pièce, peut être posé sur la surface de la pièce, ainsi qu'une douille de bridage (40) réglable par rapport à l'axe (A) de la broche de perçage qui peut être introduite dans un trou précédent et qui, en tant que contre-appui, bride la perceuse sur la pièce de manière à transmettre l'effort d'avance pendant le processus de perçage, laquelle douille de bridage, en position active, traverse l'ensemble support (4, 20) à l'intérieur de la surface d'appui délimitée par les éléments d'appui (24, 28, 30, 128, 130), caractérisée par le fait que, dans la zone de la surface de d'appui, la douille de bridage (40) peut être réglée suivant deux axes par rapport à l'ensemble support (4, 20), à savoir radialement et en azimut par rapport à l'axe (A) de la broche de perçage et que l'ensemble support est pourvu d'une découpe (38) qui s'étend radialement et dans la direction périphérique de l'axe de la broche de perçage conformément à la zone de réglage de la douille de bridage (40), laquelle découpe, pendant le processus de perçage, est positionnée au-dessus du trou précédent.

2. Perceuse selon la revendication 1, caractérisée par le fait que l'ensemble support (4, 20) et la douille de bridage (40) peuvent pivoter indépendamment l'une de l'autre concentriquement à l'axe (A) de la broche de perçage, dans un plan perpendiculaire à ce dernier.

3. Perceuse selon la revendication 1 ou 2, caractérisé par le fait que la découpe (38) est agencée sous forme de secteur d'anneau concentrique à l'axe (A) de la broche de perçage.

4. Perceuse selon l'une des revendications précédentes, caractérisé par le fait que l'ensemble support (4, 20) comprend une plaque d'appui (20) qui porte la découpe (38) et est montée tournante autour de l'axe (A) de la broche de perçage ainsi qu'un pied de guidage (34) qui repose à plat sur la plaque d'appui et, avec le carter (16) de la perceuse, peut être positionné en rotation concentriquement à l'axe de la broche de perçage par rapport à la plaque d'appui et comporte une fente (36) radiale de guidage.

5. Perceuse selon l'une des revendications précédentes, caractérisée par le fait que les éléments d'appui (24, 28, 30, 128, 130) forment au moins un appui à quatre points sur la surface de la pièce.

6. Perceuse selon la revendication 5, caractérisée par le fait que les éléments d'appui éloignés de la broche de perçage sont agencés sous forme de cornière (28) qui est fixée sur l'ensemble support (4, 20) avec possibilité de réglage de la distance par rapport à l'axe (A) de la broche de perçage et posée avec contact linéaire sur une génératrice de la surface de la pièce.

7. Perceuse selon l'une des revendications précédentes, caractérisé par le fait que l'un des éléments d'appui est agencé sous forme de bague d'appui (24) qui est disposée coaxialement à l'axe (A) de la broche de perçage et est pourvue d'un trou de passage pour l'outil de perçage (18).
